# FASCICULE DE BREVET EUROPEEN

(11) **EP 0 988 466 B1**
(45) Date de publication et mention de la délivrance du brevet: **20.03.2002**
(21) Numéro de dépôt: 98922856.4
(22) Date de dépôt: 24.04.1998
(51) Int. Cl.: F16D 55/227

(54) **FREIN A DISQUE A TUBE DE GUIDAGE PRECONTRAINT**
SCHEIBENBREMSE MIT VORGESPANNTEM FÜHRUNGSROHR
DISK BRAKE WITH PRESTRESSED GUIDE TUBE

(30) Priorité: 12.06.1997 FR 9707307
(43) Date de publication de la demande: 29.03.2000
(73) Titulaire: Bosch Systemes de Freinage, 93700 Drancy (FR)
(72) Inventeur: BOISSEAU, Jean-Pierre, F-75014 Paris (FR); MERY, Jean-Claude, F-93320 Pavillons-sous-Bois (FR)
(86) Numéro de dépôt international: FR9800818
(87) Numéro de publication internationale: WO9857073

(56) Documents cités:
- EP-A- 0 018 913
- EP-A- 0 113 214
- DE-A- 19 534 824
- US-A- 4 171 035
- US-A- 4 401 194

## Description

La présente invention concerne un frein à disque pour véhicule à moteur.

Plus précisément, la présente invention concerne un frein à disque du type de ceux qui comprennent : deux éléments de frein mobiles l'un par rapport à l'autre, dont l'un est un étrier chevauchant un disque de frein, et dont l'autre est un support fixé au véhicule, le disque adoptant un premier sens de rotation pour un déplacement du véhicule en marche avant, et le support présentant au moins des première et seconde branches radiales s'étendant axialement de part et d'autre d'une ouverture chevauchant le disque; des moyens de serrage comprenant un cylindre solidaire de l'étrier et présentant en regard du disque une ouverture fermée par un piston mobile, le disque passant entre ce piston et un nez d'étrier; deux éléments de friction comprenant chacun au moins une garniture et une plaque support présentant une première et une seconde extrémité, les éléments de friction étant tournés vers des faces opposées du disque, enserrés entre le piston et le nez d'étrier, et appliqués sur le disque lors de l'actionnement des moyens de serrage, la seconde extrémité de chaque élément de friction succédant à la première extrémité de cet élément dans le premier sens de rotation; et des moyens de guidage permettant un coulissement de l'étrier par rapport au support lors d'un actionnement des moyens de serrage, ces moyens de guidage comprenant au moins une première colonnette fixée à l'étrier perpendiculairement au disque, un premier alésage dans lequel la première colonnette peut coulisser axialement, et un premier tube de guidage lié au support fixe, perpendiculaire au disque, et dans lequel est percé le premier alésage, une surface externe dudit premier tube de guidage recevant à coulissement les premières extrémités respectives des éléments de friction.

Un tel frein est par exemple connu de l'art antérieur grâce au brevet US - 4 401 194.

Un problème qui se pose dans les freins de ce type, dits "à étrier coulissant", est la difficulté d'envisager concrètement l'utilisation des alliages légers pour la réalisation des étriers et des supports fixes du fait de la délicate mise en oeuvre d'inserts obtenus de fonderie, spécialement au niveau des glissières de patins, et de la nécessité de prévoir des renforts pour limiter les déformations sous contrainte.

L'invention se situe dans ce contexte et a pour but de proposer un frein à disque à étrier coulissant, de structure simple, dans lequel les moyens de guidage sont conçus de manière à éviter le recours aux inserts et à limiter les déformations du support.

A cette fin, le frein de l'invention, par ailleurs conforme au préambule ci-dessus, est essentiellement caractérisé en ce que la première branche radiale du support présente, de part et d'autre de ladite ouverture, deux alésages alignés percés entre des première et seconde faces d'appui du support, respectivement intérieure et extérieure, et recevant le premier tube de guidage, et en ce que la première extrémité au moins de chaque élément de friction comprend des moyens d'accrochage en forme de crochet dont l'ouverture est tournée vers le bas.

Les moyens de guidage peuvent également comprendre un second tube de guidage lié au support fixe, perpendiculaire au disque, et dans lequel est percé un second alésage, une surface externe de ce second tube de guidage recevant à coulissement les secondes extrémités des éléments de friction. Les secondes extrémités respectives présentent des moyens de coulissement en forme d'encoche.

Le frein de l'invention peut être adapté à des conditions d'application extrêmes en prévoyant que le premier tube de guidage au moins comprenne des moyens de serrage séparés par une distance réglable et propres à venir enserrer lesdites première et seconde face d'appui du support, ce dont il résulte une contrainte d'extension dans le premier tube de guidage au moins, et une contrainte de compression dans lesdites première et seconde branches radiales.

Les caractéristiques essentielles de l'invention développent toute leur utilité dans le cas où le support et l'étrier sont réalisés en un matériau de faible densité tel qu'un alliage léger ou un composite.

D'autres caractéristiques et avantages de l'invention, ressortiront clairement de la description qui en est faite ci-après, à titre indicatif et nullement limitatif, en référence aux dessins annexés dans lesquels:
- La Figure 1 est une vue perspective du frein à disque de la présente invention les éléments mobiles étant représentés démontés du support fixe.
- La Figure 2 est une vue en coupe des éléments mobiles du frein à disque de la présente invention selon les lignes II-II de la Figure 1.
- La Figure 3 est une vue perspective du frein à disque de la présente invention représenté assemblé, en coupe partielle selon les lignes III-III de la Figure 2.

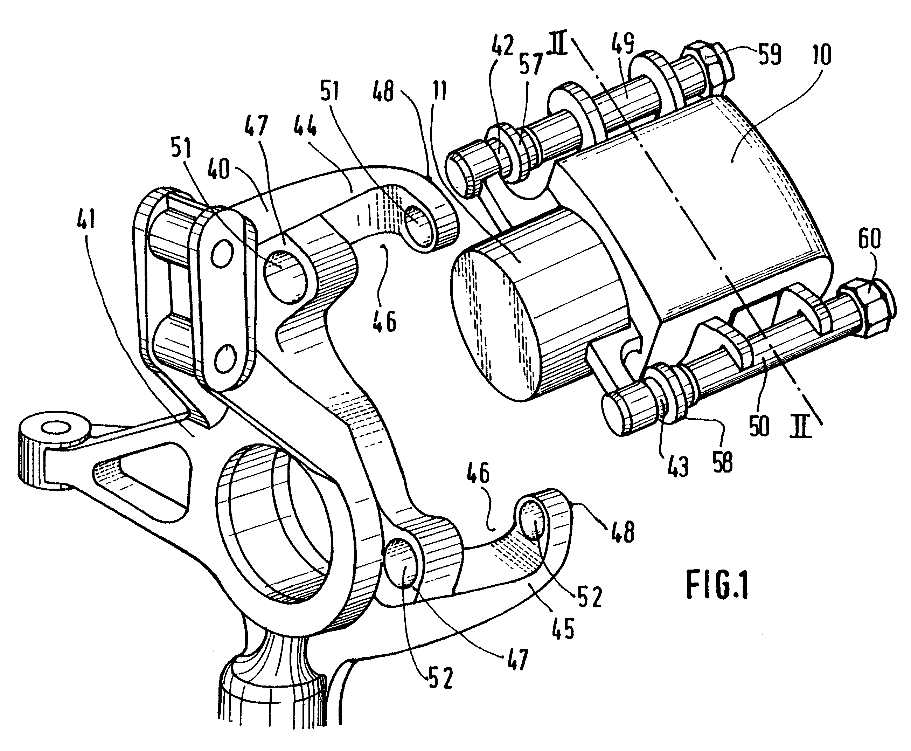

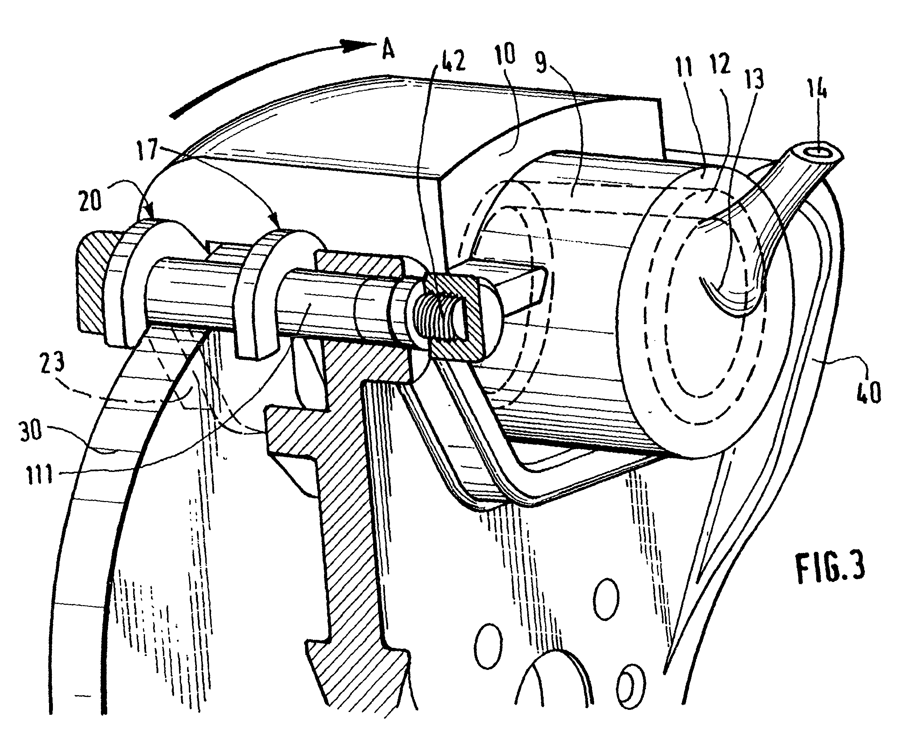

On a représenté sur les Figures 1 et 3 un frein à disque composé d'un étrier 10 et d'un support fixe 40, faisant partie intégrante ou étant solidaire, par exemple par vissage, d'une partie fixe 41 du véhicule telle qu'un porte-fusée.

L'étrier 10 chevauche un disque de frein 30 solidaire d'une roue du véhicule, tournant par exemple dans le sens de la flèche A (Figure 3) lorsque le véhicule se déplace en marche avant.

L'étrier 10 comporte sur un de ses côtés appelé par convention côté intérieur des moyens d'actionnement ou de serrage formés d'un cylindre 9 contenu dans un bossage 11 ouvert du côté du disque 30 et portant un piston 12 susceptible de coulisser lorsqu'un fluide sous pression est introduit dans une chambre de travail 13 par un conduit 14 destiné à être relié à une source de fluide sous pression, telle qu'un maître-cylindre (non représenté) commandant le circuit de freinage du véhicule automobile. Un joint carré (non représenté) logé dans une gorge du cylindre assure l'étanchéïté du coulissement du piston 12.

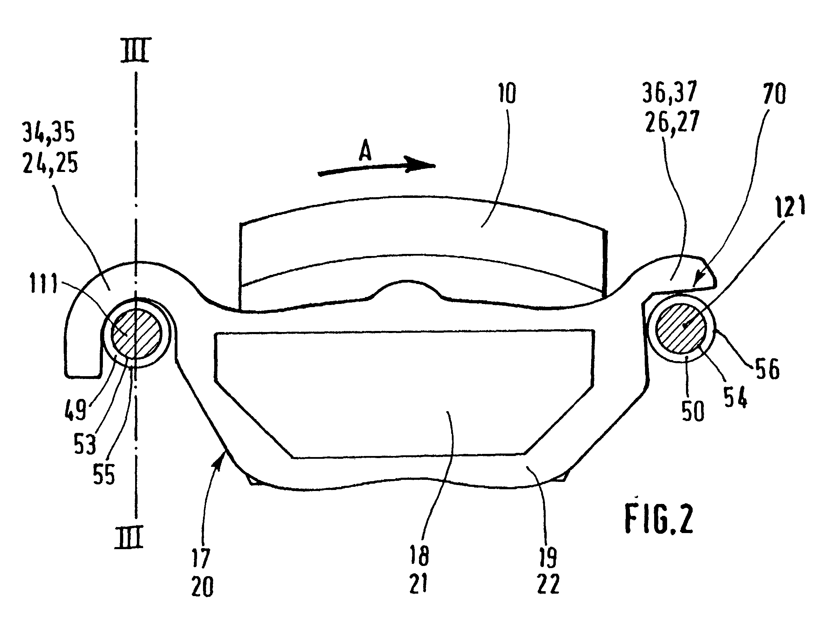

Le piston 12 est ainsi susceptible d'amener un élément de friction 17, comprenant au moins une garniture 18 et une plaque support 19 (Figure 2), directement en contact d'une face du disque 30, et un autre élément de friction 20, comprenant au moins une garniture 21 et une plaque support 22, contre l'autre face du disque 30 par réaction au moyen d'un nez d'étrier 23 formé sur l'autre côté de l'étrier 10, appelé par convention côté extérieur, lorsque l'étrier coulisse axialement par rapport au support 40.

Comme on l'a représenté sur les Figures, le coulissement de l'étrier sur le support fixe 40 est obtenu au moyen de deux appuis coulissant axialement 42 et 43 .

Dans l'exemple de réalisation représenté sur les Figures, le support 40 est d'une seule pièce avec le porte-fusée 41. Ce dernier est formé avec au moins deux branches radiales 44 et 45, s'étendant axialement de part et d'autre d'une ouverture 46 chevauchant le disque 30, à l'intérieur de laquelle vient se placer l'étrier 10 et présentant une face intérieure 47 ainsi qu'une face extérieure 48.

Les deux branches radiales 44 et 45 du support 40 présentent de part et d'autre de ladite ouverture 46, des alésages 51 et 52 percés entre la face intérieure 47 et la face extérieure 48, alignés selon une direction perpendiculaire au disque 30 et recevant les tubes de guidage 49 et 50.

Dans l'exemple de réalisation représenté sur les Figures, les premier et second tubes de guidage 49 et 50 sont constitués de tubes cylindriques présentant un alésage 53, 54 et une surface externe 55, 56 dont une première extrémité se termine par une collerette 57, 58 venant en appui sur la face intérieure 47 des branches radiales 44 et 45 du support 40 et dont une seconde extrémité est dotée d'un moyen de serrage, par exemple un filetage et son écrou 59 et 60 l'écrou venant s'appuyer, lors du serrage au montage, sur la face extérieure 48 des branches radiales 44 et 45 du support 40 et faisant naître une contrainte d'extension dans les tubes de guidage et par réaction une contrainte de compression dans les branches radiales 44 et 45.

Conformément à la présente invention le premier appui coulissant 42 est formé d'une première colonnette axiale 111 solidaire de l'étrier 10 par exemple par vissage, et reçue avec jeu dans le premier alésage 53 du premier tube de guidage 49. La colonnette axiale 111 s'étend à partir de l'étrier 10 axialement, parallèlement à l'axe du disque 30.

Le second appui coulissant 43 est formé d'une seconde colonnette axiale 121 elle aussi solidaire de l'étrier 10, et reçue dans le second alésage 54 du deuxième tube de guidage 50. La colonnette axiale 121 s'étend à partir de l'étrier 10 axialement, parallèlement à l'axe du disque 30.

Toujours selon l'invention les plaques support 19 et 22 comportent dans l'ordre défini par le sens de la marche avant du véhicule (A) des premières extrémités 24 et 25 présentant des moyens d'accrochage 34 et 35 en forme de crochet dont l'ouverture est tournée vers le bas et reçus à coulissement sur la surface externe 55 du premier tube de guidage 49, auquel ils sont susceptibles de transmettre une première partie des forces de réaction dûes au frottement des garnitures 18 et 21 sur le disque 30, ainsi que des secondes extrémités 26 et 27 présentant des moyens de coulissement 36 et 37, en forme d'encoche 70, reçus à coulissement sur la surface externe 56 du second tube de guidage 50.

Selon un mode de réalisation préféré, les encoches 70 présentent chacunes deux faces d'appui sensiblement perpendiculaires dont la première sensiblement horizontale n'est pas au contact de la surface externe 56 du second tube de guidage 50, tandis que la seconde en appui sur ladite surface externe 56 est susceptible de lui transmettre une seconde partie des forces de réaction dues au frottement des garnitures 18 et 21.

Lors d'une action de freinage, le véhicule se déplaçant en marche avant, un fluide sous pression est fourni à la chambre 13 pour faire avancer le piston 12 vers le disque 30 et, par réaction, faire s'approcher le nez 23 du disque 30. Les garnitures 18 et 21 sont ainsi amenées en contact avec les faces du disque 30 pour en ralentir la vitesse de rotation.

On voit donc bien que, grâce à l'invention, les forces de réaction dûes au frottement des garnitures 18 et 21 sur le disque 30 sont transmises au support 40 par les tubes de guidage 49 et 50 sans action sur les colonnettes et que, même sous des efforts de freinage élevés, le coulissement des colonnettes 111 et 121 de l'étrier n'est pas contrarié. De plus la disposition décrite ci-dessus permet de s'affranchir des caractéristiques de frottement des matériaux utilisés pour la réalisation du support 40 et de l'étrier 10, et d'envisager l'emploi d'alliages légers ou de composites, puisque les coulissements s'effectuent uniquement sur des guides rapportés, réalisés par exemple en acier. Par ailleurs la précontrainte appliquée aux branches radiales 44 et 45 du support 40, par les tubes de guidage en favorise la résistance mécanique.

Enfin la disposition proposée permet, par des moyens simples et peu onéreux, d'isoler les surfaces de frottement des colonnettes 111, 121 et des alésages 53, 54 des sources de corrosion habituelles.

Bien entendu, l'invention n'est pas limitée au mode de réalisation qui a été décrit, mais elle est susceptible au contraire de recevoir de nombreuses modifications qui apparaîtront à l'homme de métier et qui rentrent dans le cadre des revendications annexées. C'est ainsi par exemple que le support fixe 40 pourrait également être constitué d'une chape rapportée sur le porte-fusée 41.

## Revendications

1. Frein à disque pour véhicule à moteur, comprenant :
- deux éléments de frein (10, 40) mobiles l'un par rapport à l'autre, dont l'un est un étrier (10) chevauchant un disque de frein (30), et dont l'autre est un support (40) fixé au véhicule, le disque (30) adoptant un premier sens de rotation (A) pour un déplacement du véhicule en marche avant, et le support (40) présentant au moins des première et seconde branches radiales (44, 45) s'étendant axialement de part et d'autre d'une ouverture (46) chevauchant le disque (30);
- des moyens de serrage comprenant un cylindre (9) solidaire de l'étrier (10) et présentant en regard du disque (30) une ouverture fermée par un piston mobile (12), le disque (30) passant entre ce piston (12) et un nez d'étrier (23);
- deux éléments de friction (17, 20) comprenant chacun au moins une garniture (18, 21) et une plaque support (19, 22) présentant une première (24, 25) et une seconde extrémité (26, 27), les éléments de friction étant tournés vers des faces opposées du disque (30), enserrés entre le piston (12) et le nez d'étrier (23), et appliqués sur le disque (30) lors de l'actionnement des moyens de serrage, la seconde extrémité (26, 27) de chaque élément de friction (17, 20) succédant à la première extrémité (24, 25) de cet élément dans le premier sens de rotation (A);
- des moyens de guidage permettant un coulissement de l'étrier (10) par rapport au support (40) lors d'un actionnement des moyens de serrage, ces moyens de guidage comprenant au moins une première colonnette (111) fixée à l'étrier (10) perpendiculairement au disque (30), un premier alésage (53) dans lequel la première colonnette peut coulisser axialement, et un premier tube de guidage (49) lié au support fixe (40), perpendiculaire au disque (30), et dans lequel est percé le premier alésage (53), une surface externe (55) dudit premier tube de guidage (49) recevant à coulissement les premières extrémités respectives (24, 25) des éléments de friction (17, 20);
**caractérisé en ce que** la première branche radiale (44) du support (40) présente, de part et d'autre de ladite ouverture (46), deux alésages alignés (51) percés entre des première et seconde faces d'appui du support, respectivement intérieure (47) et extérieure (48), et recevant le premier tube de guidage (49), et **en ce que** la première extrémité (24, 25) au moins de chaque élément de friction comprend des moyens d'accrochage (34, 35) en forme de crochet dont l'ouverture est tournée vers le bas.

2. Frein à disque suivant la revendication 1, **caractérisé en ce que** les moyens de guidage comprennent un second tube de guidage (50) lié au support fixe (40), perpendiculaire au disque (30), et dans lequel est percé un second alésage (54), et **en ce qu'**une surface externe (56) dudit second tube de guidage (50), reçoit à coulissement les secondes extrémités (26, 27) des éléments de friction (17, 20).

3. Frein à disque suivant la revendication 2, **caractérisé en ce que** les secondes extrémités respectives (26, 27) présentent des moyens de coulissement (36, 37) en forme d'encoche.

4. Frein à disque suivant l'une quelconque des revendications précédentes, **caractérisé en ce que** le premier tube de guidage au moins comprend des moyens de serrage séparés par une distance réglable et propres à venir enserrer lesdites première et seconde face d'appui du support, ce dont il résulte une contrainte d'extension dans le premier tube de guidage au moins, et une contrainte de compression dans lesdites première et seconde branches radiales.

5. Frein à disque suivant l'une quelconque des revendications précédentes **caractérisé en ce que** le support (40) et l'étrier (10) sont réalisés en un matériau de faible densité tel qu'un alliage léger ou un composite.

## Patentansprüche

1. Scheibenbremse für Motorfahrzeuge, umfassend
- zwei zueinander bewegliche Bremselemente (10, 40), von denen das eine ein Bremssattel (10) ist, der eine Bremsscheibe (30) umgreift, und das andere ein Träger (40) ist, der am Fahrzeug befestigt (40) ist, wobei die Scheibe (30) eine erste Drehrichtung (A) für eine Vorwärtsbewegung des Fahrzeugs einnimmt, und der Träger (40) mindestens erste und zweite radiale Schenkel (44, 45) aufweist, die sich axial beiderseits einer die Scheibe (30) umgreifenden Öffnung (46) erstrecken;
- Spannmittel, die einen mit dem Bremssattel (10) fest verbundenen Zylinder (9) umfassen, der gegenüber der Scheibe (30) eine durch einen beweglichen Kolben (12) geschlossene Öffnung aufweist, wobei die Scheibe (30) zwischen diesem Kolben (12) und einem Bremssattelvorsprung (23) hindurchgeht;
- zwei Reibelemente (17, 20) mit jeweils mindestens einem Belag (18, 21) und einer Trägerplatte (19, 22), die ein erstes Ende (24, 25) und ein zweites Ende (26, 27) aufweisen, wobei die Reibelemente auf entgegengesetzte Seiten der Scheibe (30) gerichtet sind, zwischen dem Kolben (12) und dem Bremssattelvorprung (23) eingespannt sind und beim Betätigen der Spannmittel an die Scheibe (30) angelegt werden, wobei das zweite Ende (26, 27) jedes Reibelements (17, 20) auf das erste Ende (24, 25) dieses Elements in der ersten Drehrichtung (A) folgt;
- Führungsmittel, die ein Gleiten des Bremssattels (10) in bezug auf den Träger (40) beim Betätigen der Spannmittel ermöglichen, wobei diese Führungsmittel folgende Elemente umfassen: mindestens eine erste Stange (111), die am Bremssattel (10) senkrecht zur Scheibe (30) befestigt ist, eine erste Bohrung (53), in welcher die erste Stange axial gleiten kann, und ein erstes, zur Scheibe (30) senkrecht angeordnetes Führungsrohr (49), das mit dem feststehenden Träger (40) verbunden ist und in welchem die erste Bohrung (53) angebracht ist, wobei eine Außenfläche (55) des ersten Führungsrohrs (49) jeweils die ersten Enden (24, 25) der Reibelemente (17, 20) gleitend aufnimmt;
**dadurch gekennzeichnet, daß** der erste radiale Schenkel (44) des Trägers (40) beiderseits der Öffnung (46) zwei ausgerichtete Bohrungen (51) aufweist, die zwischen einer ersten inneren Anlagefläche (47) und einer zweiten äußeren Anlagefläche (48) des Trägers angebracht sind und das erste Führungsrohr (49) aufnehmen, und daß mindestens das erste Ende (24, 25) jedes Reibelements hakenförmige Anhängemittel (34, 35) aufweist, deren Öffnung nach unten weist.

2. Scheibenbremse nach Anspruch 1, **dadurch gekennzeichnet, daß** die Führungsmittel ein zweites, senkrecht zur Scheibe (30) angeordnetes Führungsrohr (50) umfassen, das mit dem feststehenden Träger (40) verbunden ist und in welchem eine zweite Bohrung (54) angebracht ist, und daß eine Außenfläche (56) des zweiten Führungsrohrs (50) die zweiten Enden (26, 27) der Reibelemente (17, 20) gleitend aufnimmt;

3. Scheibenbremse nach Anspruch 2, **dadurch gekennzeichnet, daß** die zweiten Enden (26, 27) jeweils Gleitelemente (36, 37) in Form eines Einschnitts aufweisen.

4. Scheibenbremse nach einem der vorstehenden Ansprüche, **dadurch gekennzeichnet, daß** mindestens das erste Führungsrohr Spannmittel aufweist, die durch einen einstellbaren Abstand voneinander getrennt sind und in der Lage sind, die erste und zweite Anlagefläche des Trägers einzuspannen, woraus eine Zugbelastung mindestens im ersten Führungsrohr und eine Druckbelastung in der ersten und zweiten radialen Schenkel entsteht.

5. Scheibenbremse nach einem der vorstehenden Ansprüche, **dadurch gekennzeichnet, daß** der Träger (40) und der Bremssattel (10) aus einem Material mit geringer Dichte wie einer leichten Legierung oder einem Verbundmaterial ausgebildet sind.

## Claims

1. Disk brake for a motor vehicle, comprising:
- two brake elements (10, 40) which can move one with respect to the other, one of which is a caliper (10). straddling a brake disk (30) and the other of which is a support (40) fixed to the vehicle, the disk (30) adopting a first direction of rotation (A) when the vehicle is moving in a forward gear and the support (40) having at least a first and a second radial branch, which branches (44, 45) extend axially on each side of an opening (46) straddling the disk (30);
- brake-application means comprising a cylinder (9) secured to the caliper (10) and having, facing the disk (30), an opening which is closed by a moving piston (12), the disk (30) passing between this piston (12) and a spur (23) of the caliper;
- two friction pads (17, 20) each comprising at least one lining (18, 21) and a carrier plate (19, 22) having a first end (24, 25) and a second end (26, 27), the friction pads pointing toward opposite faces of the disk (30), trapped between the piston (12) and the spur (23) of the caliper and pressed against the disk (30) when the brake-application means are operated, the second end (26, 27) of each friction pad (17, 20) following on from the first end (24, 25) of this pad in the first direction of rotation (A);
- guide means allowing the caliper (10) to slide with respect to the support (40) when the brake-application means are operated; these guide means comprising at least one first guide pin (111) fixed to the caliper (10) at right angles to the disk (30) and a first bore (53) in which the first guide pin can slide axially, and a first guide tube (49) connected to the fixed support (40) at right angles to the disk (30) and in which the first bore (53) is pierced, an external surface (55) of said first guide tube (49) slideably accommodating the respective first ends (24, 25) of the friction pads (17, 20);
**characterized in that** the first radial branch (44) of the support (40) has, on each side of said opening (46), two aligned bores (51) pierced between first and second bearing faces of the support, respectively an inboard face (47) and an outboard face (48), and accommodating the first guide tube (49), and **in that** the first end (24, 25) at least of each friction pad comprises attachment means (34, 35) in the form of a hook, the opening of which points downward.

2. Disk brake according to Claim 1, **characterized in that** the guide means comprise a second guide tube (50) connected to the fixed support (40) at right angles to the disk (30) and in which a second bore (54) is pierced, and **in that** an external surface (56) of said second guide tube (50) slideably accommodates the second ends (26, 27) of the friction pads (17, 20).

3. Disk brake according to Claim 2, **characterized in that** the respective second ends (26, 27) have sliding means (36, 37) in the form of a slot.

4. Disk brake according to any one of the preceding claims, **characterized in that** the first guide tube at least comprises tightening means separated by an adjustable distance and capable of trapping said first and second bearing face of the support, this resulting in a tensile strain in the first guide tube at least and a compressive strain in said first and second radial branches.

5. Disk brake according to any one of the preceding claims, **characterized in that** the support (40) and the caliper (10) are made of a low-density material such as a light alloy or composite.
